# EUROPEAN PATENT SPECIFICATION

(11) **EP 1 815 750 B1**
(45) Date of publication and mention of the grant of the patent: **29.09.2010**
(21) Application number: 07101531.7
(22) Date of filing: 31.01.2007
(51) Int. Cl.: A23F 5/32, A23F 5/38

(54) **Food product and process therefor**
Lebensmittelprodukt und Herstellungsverfahren dafür
Produit alimentaire et processus correspondant

(30) Priority: 02.02.2006 IT TO20060071
(43) Date of publication of application: 08.08.2007
(73) Proprietor: Luigi Lavazza S.p.A., 10154 Torino (IT)
(72) Inventor: Adria', Ferran, 08002, Barcelona (ES)
(74) Representative: Gallarotti, Franco

(56) References cited:
- EP-A1- 1 021 957
- WO-A-94/28736
- WO-A-2004/034798
- CA-A- 984 216
- GB-A- 1 102 587
- GB-A- 1 302 289
- US-A- 3 482 990
- US-A- 3 804 960
- US-A- 4 793 323
- US-B1- 6 428 833
- INTERNET CITATION, [Online] Internet Article "Coffee Meringue" Retrieved from the Internet: <URL:http://lospaziodistaximo.blogspot.com/ 2005/08/shf-11-delizie-al-caff-english-vers ion.html?showComment=1124114700000> [retrieved on 2099-10-23]

## Description

The present invention relates to edible food products and has been developed with particular reference to coffee-based edible products.

In order to allow tasting of coffee and coffee-based preparations, when the conditions for their extemporaneous preparation do not subsist, there have been proposed prepackaged single-dose products, which comprise essentially a cup container, having a removable or pierceable sealing membrane, holding liquid coffee or a coffee-based beverage. The membrane is removed (or pierced by a drinking-straw) and the product is drunk at room temperature, In some cases the container is prearranged for developing an exothermic reaction, in order to heat the beverage (see for instance US 4,793,323). In both the above mentioned solutions the packaging is generally bulky, with respect to the effective product content. The likely presence of preservative, aimed at avoiding a quick perishing of the product, affects in a negative way the organoleptic of the coffee, as perceived by the consumers.

According to other solutions the coffee, in a liquid state, is contained in an edible carrier, namely a chocolate casing. However, production of coffee-filled chocolate is rather complex. This kind of products are notably sensitive to temperature and their production is thus a substantially seasonal one. Additionally, when eaten, the chocolate carrier alters the coffee taste, which fact is disliked by certain consumers.

From WO-A-2004/034798 a coffee tablet for preparing a coffee beverage is known, obtainable by molding and freeze-drying a solution of coffee solids into a desired shape, which has improved dissolution properties. Other examples of methods for obtaining freeze-dried coffee products to be used for the preparation of beverages are disclosed, for instance, in US-A-3482990 and US-A-3804960.

The present invention aims essentially at solving the above drawbacks.

According to the present invention, such aim is attained thanks to a product and a process having the characteristics stated in claims 1 and 6. The claims form an integral part of the technical teaching provided herein with reference to the invention.

Much briefly, the above aims are attained, according to the invention, by a an aerated (or foamed) edible food product, and therefore with a low specific weight, substantially consisting of a freeze-dried solid mass of a foam having coffee as a main ingredient.

A typical example of an aerated confectionery product is represented by the so-called "meringue". By such denomination, a product obtained by solidifying, through cooking, a liquid/foamy mass formed with water, egg white and sugar, supplemented with flavorings, if necessary, is usually shown. See for example the following Internet Article, upon which the preamble of claims 1 and 6 is based: "Coffee Meringue", published 11.082005, URL http://lospaziodistaximo.blogspot.com/2005/08/shf-11-delizie-al-caff-english-version.html?showComment=1124114700000. In the present invention, the foamed mass having coffee as its main ingredient, is made to solidify by means of freeze-drying, and not by cooking.

The process according to the invention foresees the preparation of a foamy precursor of the aerated food product, having coffee as a main ingredient, such precursor being subsequently solidified through freeze-drying in order to obtain the solid end product, particularly in the form of an homogeneous, not pulverulent, mass which can be consumed in a single mouthful or, in case, in more bites or mouthfuls.

Within the present description and the appended claims, by the term "coffee" is understood to mean, if not otherwise specified, any beverage organoleptically perceived as coffee, independently of the fact that it is integrally or partly made with coffee. In such a point of view, therefore, within the term coffee there are included, for example, the barley coffee, the malt coffee and similar beverages based on coffee surrogates or substitutes, or all those substitutive products which, without being able to be properly called coffee, for example by virtue of specific rules, imitate in some way the features thereof.

In accordance with the invention the aforesaid foamy precursor includes, as an additional ingredient, a milk product.

Within the present invention and the appended claims by the term "milk product" is understood to mean any substance perceived as milk or a part thereof (for example its fat fraction), independently of the fact that such substance is integrally or partly made of animal milk; in such a point of view, within the term milk product there are therefore included, besides the animal milk and the related cream, also substances mainly obtained from the fat fraction of the animal milk, such as the powdered milk and the condensed milk, as well as substitutive products of the animal milk or parts thereof (such as the soy milk, the rice milk, the vegetable cream, etcetera).

Preferably, the used coffee is espresso coffee and the milk product is cow's milk-liquid cream.

Always in accordance with the invention, for the purposes of the formation of the aforesaid foam, one or more additives, such as a gelling agent, particularly a food jelly and, if necessary, a sweetener, particularly sugar, are employed.

The quantity of milk product is lower, by percent based on the total weight of the foam, than the quantity of coffee and greater than the quantity of the foreseen additive or additives.

In the present description and in the appended claims, by the term "sweetener" is understood to mean the sugar, of any origin, and surrogates and substitutes thereof, such as natural (such as for example dextrose and fructose) or artificial (such as for example aspartame and saccharine) sweeteners, both mono- or polysaccharides.

Further aims, characteristics and advantages of the invention will become apparent from the following detailed description made with reference to the annexed drawings, which are supplied as a mere non limiting example, wherein:
- figure 1 is a schematic diagram of an apparatus that can be used in order to obtain, in an industrial context, a precursor of a product according to the invention;
- figure 2 is a schematic perspective view of a product according to the invention; and
- figure 3 is a schematic perspective view of a packaging of the product according to the invention.

A production process of an aerated edible food product, according of the invention, will be now provided by mere way of non limiting example. The example provided herein relates to the aforesaid preferred embodiment, according to which the aerated edible product according to the invention is essentially definable as a "freeze-dried cappuccino foam"; such product is in fact obtained from the drying of a foam whose main ingredients, namely those existing in relative greater quantities over the total or more immediately detectable from the taste point of view, are liquid coffee and a liquid milk product, which notoriously also constitute the more important ingredients of the beverage commonly known as "cappuccino".

The first step of the process is represented by the preparation of a "cappuccino foam", which forms a foamy precursor of the end aerated edible product. Such foam is in turn obtained starting from a respective liquid precursor: in the embodiment exemplified herein, such liquid precursor is obtained by the hot mixing of the coffee, of the milk product, of a gelling agent and a of a sweetener; the mixture thus obtained is subsequently emulsified by means of a gas and cooled at a refrigerator temperature.

In general terms, the ratios of the single ingredients and additives, based on the total weight quantity of the liquid precursor, are the following:

| | |
|---|---|
| - coffee: | from 40 to 60% |
| - milk product: | from 25 to 45% |
| - sweetener: | from 5 to 25% |
| - gelling agent: | from 0.3% to 2.3% |

In the practical execution example described herein, the foam is prepared starting from about half a litre of a starting liquid compound formed by:

| | | |
|---|---|---|
| - espresso coffee: | 250 g. | 49.85% |
| - liquid cream: | 175 g. | 34.90% |
| - sugar: | 70 g. | 13.96% |
| - food jelly: | 6.5 g. | 1.29% |
| TOTAL | 501.5 g. | 100.00% |

The steps followed for the purposes of the preparation of the foam are the following:
1. the espresso coffee is prepared and dosed (about 255 ml);
2. the cow's milk-liquid cream is warmed by avoiding the boiling thereof, and subsequently dosed (about 180 ml);
3. the additives represented by sugar and (instant and powdered) food jelly are mixed together;
4. the sugar-jelly mixture is dispersed in the vessel containing the still hot coffee, by continuous stirring in order to avoid the clots production;
5. the still hot cream is poured in the above vessel;
6. the liquid compound thus obtained is poured, subject to a possible filtering through a fine-mesh sieve, in a container with a hermetic seal, which in this case is supposed to be a common siphon for food emulsions, of a per se known type;
7. the siphon is tightly closed with the relative cover or plug, which has a relative delivery spout with a push-button valve;
8. within the siphon a propellant gas is insufflated, for example nitrous oxide (N₂O), having the function of emulsifying the liquid compound; such step is carried out by introducing a gas cartridge in a proper threaded cylinder of the siphon, and subsequently screwing the cylinder itself in a proper seat of the aforesaid cover; after the gas insufflation, the exhausted cartridge can be removed;
9. the siphon is stirred for stirring the liquid compound with the gas;
10. the siphon, with its content, is cooled, preferably by maintaining it in a refrigerator cabinet at a temperature of about 4°C over a time approximately between about 5 and 6 hours (preferably the storage time should not exceed in any case 36 hours).

As already explained, the example above given is merely indicative and should not be intended in a limiting sense, above all with reference to the limited quantity of the starting liquid compound and the use of emulsion containers of a poor capacity; the process above described is in fact feasible for considerably greater volumes and on production plants practicable with the available technology. The example given has to be intended as a non limiting one also with reference to the components of the liquid compound above mentioned, some of which could be omitted and/or replaced.

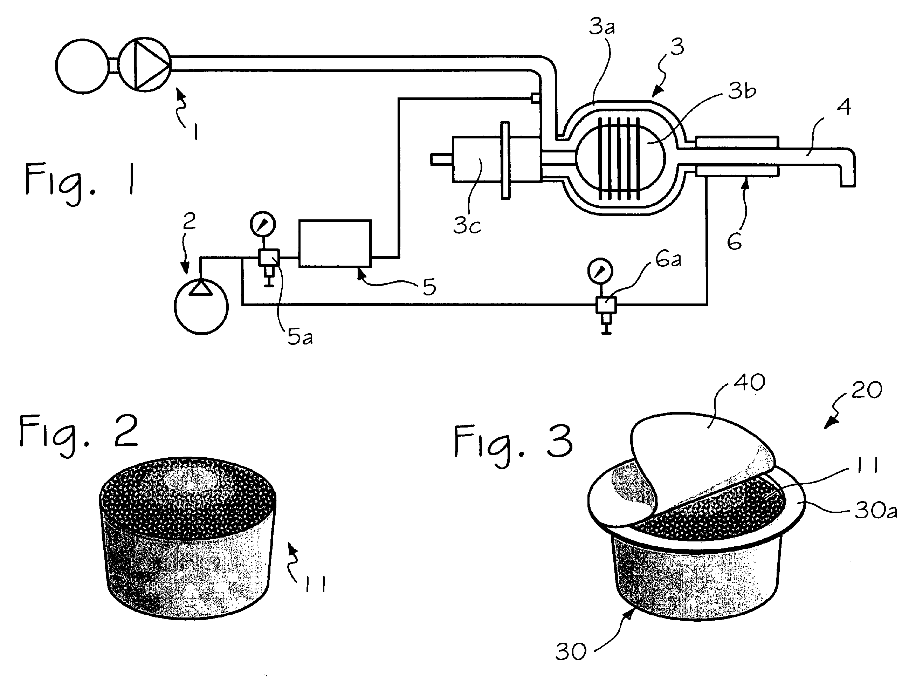

Figure 1 show in a schematic way an example of an aerating apparatus that can be used for reproducing the results of a siphon, on a larger scale.

In this figure, 1 indicates a pump supplying the starting liquid compound and 2 indicates a source for supplying an emulsifying gas under pressure. 3 indicates a mixing head, comprising a stator 3a, defining a chamber to which the outlet of the pump 1 is connected. Within the stator a movable rotor 3b is mounted, actuated through a respective motor 3c, at least one of the chamber and the rotor of the head having pins. The outlet of the pump 1 is connected to the above cited chamber. 4 indicates an outlet of the head 2, for delivering the foam. 5 indicates a system for injecting in the head 2 the emulsifying gas, having a respective adjusting valve 5a. 6 indicates a system for maintaining a pressure within the head 2, being provided on the outlet 4 and including a respective adjusting valve 6a.

The starting compound is admitted to the head 2 though the pump 5. In the entry of the head 2 a quantity of the compressed gas is admitted, which can be adjusted, by the system 5-5a, which gas can be nitrogen, nitrous oxide or filtered/purified air. The gas/compound mixture is thus greatly intimately blended through the pins of the head 2. Preferably, in order to obtain a good aerated foam at the outlet 4, the head is also maintained on pressure, by the system 6-6a.

The second step of the process subject of the invention is represented by the foam delivery from the relative container (the siphon, in our example) in a relative mold, having for example a body made of silicone material. In the above silicone body, a plurality of alveola, each sized for receiving a respective foam dose intended for forming a single aerated product, can be suitably formed. However, in a particularly advantageous implementation of the invention, the foam is directly dispensed in a single-dose container, which is part of the final package of the product and thus it is also exploited as a mold during the production phase.

After the foam delivery in the mold (with a possible removal of the foam in excess relative to the alveolation) the third step of the process subject of the invention, represented by the freeze-drying process, is carried out.

As it is known, the freeze-drying is a process through which a solvent (normally water) is removed from a food or from a frozen solution, through sublimation of the solvent itself and desorption by means of a reduced pressure or the vacuum. In general terms, the process includes a freezing step, a primary drying step and a secondary drying step.

### Freezing

In this step the foam is cooled down until a complete freezing.

The freezing should preferably proceed quickly, with the formation of as small ice crystals as possible.

The cooling temperature is lower or equal to the freezing temperature of the foam; in view of the nature of the food matrix, it seems to be preferable, in any case, a temperature lower or equal to -40°C.

### Primary drying

In such step, the frozen solvent (water) is removed by sublimation, namely by direct passage from the solid state to the aeriform state; this involves, in general terms, that the pressure of the system in which a generic product is processed is lower or close to the triple point of the frozen solvent (namely that particular temperature and pressure condition to which the solid, liquid and aeriform states of the solvent are coexisting) .

If, for example, only frozen clear water were processed, the sublimation could take place at 0°c, or close to 0°C, and at an absolute pressure of 4.58 mmHg; however, since the water is often present in a combined state (for example in the foods), the material must usually be processed at temperatures lower than 0°C, so as to maintain the water at the solid state.

In the step in question, it is required to provide the product with a heat quantity equivalent to the sublimation latent heat of the ice (2840 KJ/Kg): this allows to maintain constant the temperature and the consequent drying rate.

In the specific case of the invention, after the freezing, the foam is maintained at a temperature lower than 0°C, within a chamber in which the absolute pressure is approximately lower or equal to 100 µmHg.

The heat required for the sublimation can be provided to the foam by conduction, through a hot metal plate (however, other techniques for the supply of the sublimation heat are clearly possible: by convection of a gas circulating in the chamber, by infrared radiation, by microwave radiation, etcetera). The water vapor formed by the sublimation of the ice crystals is removed, for example, by condensation on a surface kept at a temperature higher than the one of the sublimating ice crystals (alternatively, the vapor could be removed by dragging of a gas circulating in the chamber or only through suctioning of a vacuum pump).

During the primary drying, in the foam the following layers are formed:
- a dry and porous outer layer, whose thickness increases with the time (until it concerns the whole product, at the end of the process);
- a still frozen inner layer, whose thickness decreases with the time (until it disappears at the end of the process);
- a separation surface between the two aforesaid layers, called "sublimation front".

### Secondary drying

Such step, which is started at the end of the primary drying, involves that water not present at the frozen state, since bound or adsorbed. In the secondary drying step, the de-adsorbed vapor is transported through the pores of the material already dried. In general, the removal of the water bound or adsorbed occurs with the vacuum and at temperatures between 10 and 35°C for thermosensitive products, and around 50°C or more for the products less sensitive to the heat.

Also in the specific case of the invention, therefore, once the sublimation has been ended, on the surface of the products there remain water residues; such residues are eliminated by maintaining the vacuum in the processing chamber and rising back the temperature within such chamber at a value higher than 0°c. The maximum temperature of the product in the secondary drying step is preferably lower or equal to 20°C, which is considered the maximum limit which allows to preserve the organoleptic features of the product.

For small quantities of product, as in the embodiment example provided herein, the freezing step can be carried out in the same apparatus which is able to carry out the two following drying steps. Such apparatus, or lyostat, can include a vacuum-tight chamber, in which a series of radiating plates, for example fed, through a circulating pump, by a hot fluid coming from a heat exchanger, is foreseen; the apparatus is completed by a condenser with the relative refrigerator assembly and a pumping assembly for creating the vacuum in the chamber; the condenser typically consists of a set of tubes crossed by a refrigeration fluid.

The mold containing the foam is introduced in the aforesaid chamber, placed on the radiating plates or in their proximity, and the air is evacuated from the chamber itself through the pumping group. After the freezing of the foam, obtained by the refrigerator assembly, the sublimation step is started, during which the required calorific energy is provided by the radiating plates. The vapor thus formed, before reaching the pumping assembly, is intercepted by a condenser coil, on which surfaces the vapor is condensed and transformed in ice. Once the primary drying step is ended, the temperature in the chamber is raised above 0°C, so as to carry out the secondary drying step. Next, the vacuum is stopped and the mold is evacuated from the hermetic chamber. The process times clearly depend on different factors, such as the quantity of processed product, the dimensions of the single product, the dimensions of the processing chamber, etcetera.

Naturally, also the example of freeze-drying process above mentioned is merely indicative and has not to be intended as limitative; in such a point of view, therefore, when large product volumes are processed, the freezing of the foam and the following drying steps could be carried out on different apparatus of a same industrial production plant.

After the evacuation from the freeze-drying apparatus, on the surface of the single products a further powdery ingredient, particularly powdered cocoa, can be dusted; such operation can be carried out, with procedures and means per se known, while the products are still arranged within the alveolas of the mold or in a subsequent moment. Also the removal of the products from the mold takes place with procedures per se known, preferably by exploiting the deformability of the silicone material in which the alveolation is formed. As said above, however, in a particularly advantageous implementation of the invention the mold for the product is embodied by a single-dose container which will make part of the final packaging thereof: in such an implementation, the powder cocoa will be dusted directly on the product contained in the said container, without any extraction being needed in view of the subsequent final packaging.

The products can be then temporarily stored in a dry environment or directly packaged. Considering the high hygroscopicity of the aerated product obtained as above described, the material used for the packaging must have good humidity barrier properties; for this purpose, for the package, any heat-, ultrasonic-, vibration-sealable, etc. synthetic film known for food use can be used. In the above mentioned particularly advantageous implementation of the invention, the single-dose mold/container is directly sealed by means of a closure membrane, for instance being heat-welded.

The process subject of the invention allows to obtain an extremely light and friable solid edible product, capable of perfectly maintaining the shape assigned thereto by the mold. The shapes assigned to the edible product could obviously be the most different (biscuit-shaped, bonbon-shaped, etcetera), compatibly with the selected dimensions; the dimensions will substantially be in the order of a mouthful in order to allow the consume of the whole edible product in a single solution, also if nothing prevents to dimension the product such that the same can be consumable in more bites or mouthfuls. By mere way of example, the aerated edible product can have a substantially cylindrical or slightly conical shape, with a height of about 2-2.5 cm and a diameter of about 3-3.5 cm.

A schematic example of such a shape is shown at figure 2, wherein the edible product according to the invention is indicated by 11. Figure 3 then shows an example of final package for the product 11, according to the above particularly advantageous implementation of the invention, the shown package being semi-open.

The package, indicated by 20 as a whole, is configured like a sealed capsule, formed by the container (that, as said, was previously exploited as a mold), indicated by 30, and a sealing membrane 40.

The container 30, whose body is semi-rigid, is preferably formed by a plastic material for food, for instance polypropylene, which is an ideal material for this use, due to its hygiene and functionality, as well as its optimal barrier property. The container 30 has a peripheral wall having a cylindrical shape, or a slightly truncated-cone shape to ease extraction of the product when eaten, and a bottom, non visible in the figure. The upper end of the wall 30 has an outward protruding rim 30a. The container 30 is sealed by means of the membrane 40, which is for instance heat-bonded on the rim 30a. The membrane 40 is preferably a multilayered membrane, for instance of polypropylene or polypropylene and aluminum, to ensure a perfect sealing.

A substantial advantage of the invention is that the aerated edible product preserves the flavor and the organoleptic properties of its initial liquid precursor, avoiding significant alterations thereof, such as the protein denaturation. When it is eaten, the aerated edible product according to the invention is quickly dissolved on the palate. Therefore, it will be appreciated that, thanks to the aforesaid characteristics, the invention offers to the consumers the possibility of tasting at any time a product which accurately reproduces the organoleptic properties of a coffee-based beverage, and particularly of a cappuccino, also when the conditions of normal use or preparation of such beverage (into the car, during an excursion, on the beach, etcetera) are not existing. In such a point of view, it has to be pointed out that the packaged product can be easily stored at ordinary temperature, even for relatively long periods, thus resulting readily transportable.

The invention has been described with reference to a preferred embodiment thereof, in which the main ingredients of the end product are coffee and a milk product.

Obviously, further without prejudice to the principle of the invention, construction details and embodiments could widely vary with respect to what has been described and shown by mere way of example, without leaving the scope of the present invention, as it is defined by the appended claims.

## Claims

1. An edible aerated food product adapted to be consumed in one or more bites or mouthfuls, **characterized by** substantially consisting of a freeze-dried solid mass (11) of a foam having coffee as a main ingredient, the foam also comprising a milk product and one or more additives, the quantity of milk product being lower, by percent based on the total weight of the foam, than the quantity of coffee and greater than the quantity of the foreseen additive or additives.

2. The product according to claim 1, wherein said additive or additives comprises at least one of a gelling agent and a sweetener.

3. The product according to claim 1, wherein the freeze-dried solid mass (11) is hermetically enclosed in a single-dose package (20).

4. The product according to claim 3, wherein the package is configured as a capsule (20) comprising a semi-rigid container (30), particularly made of plastic material and having an upper rim (30a), onto which a sealing membrane is bonded.

5. The product according to claim 4, wherein the container (30) has a substantially hollow cylindrical or truncated-cone shape and the freeze-dried solid mass (11) has a shape which is substantially complementary to a containment volume defined by the container (30).

6. A process for preparing an edible aerated food product adapted to be consumed in one or more bites or mouthfuls, which comprises the operations of:
- preparing a foam including coffee as an ingredient thereof, and
- causing solidification of said foam, so as to form at least a respective aerated product (11), **characterized in that**
- said foam is prepared using coffee as the main ingredient,
- preparation of said foam or the liquid precursor thereof comprises combining the coffee with a milk product and one or more additives, the quantity of milk product being lower, by percent based on the total weight of the foam or the liquid precursor thereof, than the quantity of coffee and greater than the quantity of the foreseen additive or additives, and
- said foam is caused to solidify by freeze-drying.

7. The process according to claim 6, comprising the operations of:
- introducing said foam within a mold,
- obtaining said solidification of said foam introduced in said mold.

8. The process according to claim 6, wherein the operation of preparing said foam comprises the steps of:
- preparing said liquid precursor of said foam;
- emulsifying said liquid precursor, particularly trough a gas.

9. The process according to claim 6, wherein the additive or the additives comprises or comprise at least one of a gelling agent and a sweetener.

10. The process according to claim 6, wherein said liquid precursor is formed by combining together coffee, a milk product, a gelling agent and a sweetener.

11. The process according to claim 10, wherein said liquid precursor comprises, by percent based on its total weight:
- not less than 40% of coffee, particularly about 50%;
- not less than 25% of milk product, particularly about 35%;
- not less than 5% of sweetener, particularly about 14%;
- not less than 0.3% of gelling agent, particularly about 1.3%.

12. The process according to one or more of the preceding claims, wherein
- the coffee is espresso coffee, and/or
- the milk product is animal milk cream, and/or
- the gelling agent is a powdered food jelly, and/or
- the sweetener is sugar.

13. The process according to claim 10, wherein the operation of preparing said liquid precursor comprises the steps of:
- preparing the coffee;
- dispersing the additive or additives in the still hot coffee and mixing the compound thus obtained;
- warming the liquid-shaped milk product, preferably avoiding boiling thereof;
- adding the milk product to said compound.

14. The process according to claim 13, wherein emulsifying said liquid precursor includes the steps of:
- adding a pressurized gas to the liquid precursor;
- mixing the liquid precursor with the gas.

15. The process according to claim 6, wherein the operation of causing solidification by means of freeze-drying includes the successive following steps:
- subjecting the foam to freezing;
- subjecting the foam at a primary drying or sublimation step, and
- subjecting the foam at a secondary drying step.

16. The process according to claim 7, wherein said operation of introducing includes the steps of:
- distributing said foam in an alveolation of said mold, and, if necessary,
- removing the foam in excess with respect to said alveolation.

17. The process according to claim 7, wherein the mold is configured as a container that embodies at least part of single-dose package of the product.

18. The process according to claim 17, further comprising the operation of sealing said container by a membrane, particularly through heat-bonding.

19. The process according to claim 6, further including the operation of dusting on the aerated product a further ingredient in a powdery form, particularly powdered cocoa.

20. The process according to claim 6, comprising:
- preparing said liquid precursor,
- emulsifying said liquid precursor through a gas, for the purpose of obtaining a foamy precursor of an aerated product,
- providing a single-dose container for the product,
- introducing said foamy precursor in said container,
- obtaining the solidification of said foamy precursor introduced in said container through freeze-drying, so as to form at least a respective aerated product, and
- hermetically sealing said container.

## Patentansprüche

1. Essbares, luftig aufgeschlagenes Nahrungsprodukt, das angepasst ist, um in einem oder zwei Bissen oder Happen konsumiert zu werden, **dadurch gekennzeichnet, dass** es im Wesentlichen aus einer gefriergetrockneten festen Masse (11) aus Schaum besteht, deren Hauptbestandteil Kaffee ist, wobei der Schaum außerdem ein Milchprodukt und ein oder mehrere Zusatzstoffe umfasst, wobei die Menge des Milchprodukts, in Prozent basierend auf dem Gesamtgewicht des Schaums, geringer ist als die Menge des Kaffees und größer ist als die Menge des vorgesehenen Zusatzstoffs oder der Zusatzstoffe.

2. Produkt nach Anspruch 1, wobei der Zusatzstoff oder die Zusatzstoffe mindestens eines aus einem Geliermittel und einem Süßungsmittel umfassen.

3. Produkt nach Anspruch 1, wobei die gefriergetrocknete feste Masse (11) hermetisch in eine Einzeldosis-Verpackung (20) eingeschlossen ist.

4. Produkt nach Anspruch 3, wobei die Verpackung als Kapsel (20) gestaltet ist, die ein halbstarres Packmittel (30) umfasst, das insbesondere aus Kunststoffmaterial hergestellt ist und einen oberen Rand (30a) aufweist, auf den eine Dichtungsmembran geklebt ist.

5. Produkt nach Anspruch 4, wobei das Packmittel (30) im Wesentlichen Hohlzylinder- oder Kegelstumpfform aufweist und die gefriergetrocknete feste Masse (11) eine Form hat, die im Wesentlichen komplementär zu einem Aufnahmevolumen ist, das durch das Packmittel (30) definiert ist.

6. Verfahren zur Herstellung eines essbaren, luftig aufgeschlagenen Nahrungsprodukts, das angepasst ist, um in einem oder mehreren Bissen oder Happen konsumiert zu werden, das die folgenden Vorgänge umfasst:
- Herstellen eines Schaums, der Kaffee als einen Bestandteil enthält, und
- Herbeiführen der Verfestigung des Schaums, um mindestens ein entsprechendes luftig aufgeschlagenes Produkt (11) zu bilden,
- **dadurch gekennzeichnet, dass**
- der Schaum unter Verwendung von Kaffee als Hauptbestandteil hergestellt wird,
- wobei das Herstellen des Schaums oder des flüssigen Vorläufers davon das Kombinieren des Kaffees mit einem Milchprodukt und einem oder mehreren Zusatzstoffen umfasst, wobei die Menge des Milchprodukts, in Prozent basierend auf dem Gesamtgewicht des Schaums oder des flüssigen Vorläufers davon, geringer ist als die Menge des Kaffees und größer ist als die Menge des vorgesehenen Zusatzstoffs oder der Zusatzstoffe, und
- wobei die Verfestigung des Schaums durch Gefriertrocknen herbeigeführt wird.

7. Verfahren nach Anspruch 6, das die folgenden Vorgänge umfasst:
- Einführen des Schaums in eine Form,
- Erhalten der Verfestigung des in die Form eingeführten Schaums.

8. Verfahren nach Anspruch 6, wobei der Vorgang des Herstellens des Schaums die folgenden Schritte umfasst:
- Herstellen eines flüssigen Vorläufers des Schaums;
- Emulgieren des flüssigen Vorläufers, insbesondere durch ein Gas.

9. Verfahren nach Anspruch 6, wobei der Zusatzstoff oder die Zusatzstoffe mindestens eines aus einem Geliermittel und einem Süßungsmittel umfasst oder umfassen.

10. Verfahren nach Anspruch 6, wobei der flüssige Vorläufer durch die Kombination von Kaffee, einem Milchprodukt, einem Geliermittel und einem Süßungsmittel gebildet wird.

11. Verfahren nach Anspruch 10, wobei der flüssige Vorläufer, in Prozent basierend auf seinem Gesamtgewicht, Folgendes umfasst:
- nicht weniger als 40% Kaffee, insbesondere etwa 50%;
- nicht weniger als 25% Milchprodukt, insbesondere etwa 35%;
- nicht weniger als 5% Süßungsmittel, insbesondere etwa 14%;
- nicht weniger als 0,3% Geliermittel, insbesondere etwa 1,3%.

12. Verfahren nach einem oder mehreren der vorhergehenden Ansprüche, wobei
- der Kaffee Espressokaffee ist, und/oder
- das Milchprodukt ein tierischer Milchrahm ist, und/oder
- das Geliermittel ein pulverförmiges Nahrungsmittelgelee ist, und/oder
- das Süßungsmittel Zucker ist.

13. Verfahren nach Anspruch 10, wobei der Vorgang des Herstellens des flüssigen Vorläufers die folgenden Schritte umfasst:
- Herstellen des Kaffees;
- Dispergieren des Zusatzstoffs oder der Zusatzstoffe in dem noch heißen Kaffee und Mischen der so erhaltenen Verbindung;
- Erwärmen des flüssigförmigen Milchprodukts, wobei das Kochen desselben bevorzugt vermieden wird;
- Zugeben des Milchprodukts zu der Verbindung.

14. Verfahren nach Anspruch 13, wobei das Emulgieren des flüssigen Vorläufers die folgenden Schritte beinhaltet:
- Zugeben eines Druckgases zu dem flüssigen Vorläufer;
- Mischen des flüssigen Vorläufers mit dem Gas.

15. Verfahren nach Anspruch 6, wobei der Vorgang des Herbeiführens der Verfestigung mittels Gefriertrocknen die folgenden aufeinanderfolgenden Schritte beinhaltet:
- Einfrieren des Schaums;
- Unterziehen des Schaums einem ersten Trocknungs- oder Sublimationsschritt, und
- Unterziehen des Schaums einem zweiten Trocknungsschritt.

16. Verfahren nach Anspruch 7, wobei der Vorgang des Einführens die folgenden Schritte beinhaltet:
- Verteilen des Schaums in einer Vertiefung der Form, und gegebenenfalls,
- Entfernen des Schaums, der bezogen auf die Vertiefung überschüssig ist.

17. Verfahren nach Anspruch 7, wobei die Form als ein Packmittel gestaltet ist, das mindestens einen Teil einer Einzeldosis-Verpackung des Produkts darstellt.

18. Verfahren nach Anspruch 17, das ferner den Vorgang des Verschweißens des Packmittels durch eine Membran, insbesondere durch Heißverkleben, umfasst.

19. Verfahren nach Anspruch 6, das ferner den Vorgang des Bestäubens des luftig aufgeschlagenen Produkts mit einem weiteren Bestandteil in pulveriger Form, insbesondere mit pulverförmigem Kakao umfasst.

20. Verfahren nach Anspruch 6, das Folgendes umfasst:
- Herstellen des flüssigen Vorläufers,
- Emulgieren des flüssigen Vorläufers durch ein Gas, um einen schaumigen Vorläufer eines luftig aufgeschlagenen Produkts zu erhalten,
- Bereitstellen eines Einzeldosis-Packmittels für das Produkt,
- Einführen des schaumigen Vorläufers in das Packmittel,
- Erhalten der Verfestigung des schaumigen Vorläufers, der in das Packmittel eingeführt ist, durch Gefriertrocknen, um mindestens ein entsprechendes luftig aufgeschlagenes Produkt zu bilden, und
- hermetisches Verschließen des Packmittels.

## Revendications

1. Produit alimentaire comestible gazéifié adapté pour être consommé en un ou plusieurs morceau (x) ou en une ou plusieurs bouchées, **caractérisé par** le fait d'être constitué essentiellement d'une masse solide lyophilisée (11) d'une mousse comportant du café comme ingrédient principal, la mousse comportant également un produit laitier et un ou plusieurs additif(s), la quantité de produit laitier étant plus petite, en pourcentage sur la base du poids total de la mousse, que la quantité de café et plus grande que la quantité de l'additif ou des additifs prévu(s).

2. Produit selon la revendication 1, dans lequel ledit additif ou lesdits additifs comporte(nt) au moins l'un d'un agent de gélification ou d'un édulcorant.

3. Produit selon la revendication 1, dans lequel la masse solide lyophilisée (11) est enfermée hermétiquement dans un emballage pour une seule dose (20).

4. Produit selon la revendication 3, dans lequel l'emballage est configuré sous la forme d'une capsule (20) comprenant un conteneur semi-rigide (30), particulièrement constitué de matière plastique et comportant un rebord supérieur (30a) sur lequel est fixée une membrane d'étanchéité.

5. Produit selon la revendication 4, dans lequel le conteneur (30) présente une configuration essentiellement cylindrique creuse ou en forme de cône tronqué et dans lequel la masse solide lyophilisée (11) présente une configuration qui est essentiellement complémentaire d'un volume de confinement défini par le conteneur (30).

6. Processus permettant de préparer un produit alimentaire gazéifié comestible adapté pour être consommé en un ou plusieurs morceau (x) ou en une ou plusieurs bouchées, lequel comporte les opérations comprenant de :
- préparer une mousse incluant du café en tant qu'ingrédient de celle-ci, et
- provoquer une solidification de ladite mousse de façon à former au moins un produit gazéifié respectif (11) ,
**caractérisé en ce que**
- ladite mousse est préparée en utilisant du café comme ingrédient principal,
- la préparation de ladite mousse ou de son liquide précurseur comprend de combiner le café avec un produit laitier et un ou plusieurs additif(s), la quantité de produit laitier étant plus petite, en pourcentage sur la base du poids total de la mousse ou du liquide précurseur de celle-ci, que la quantité de café et plus grande que la quantité de l'additif ou des additifs prévu(s), et
- ladite mousse est entraînée à être solidifiée par lyophilisation.

7. Processus selon la revendication 6, comprenant les opérations consistant à:
- introduire ladite mousse à l'intérieur d'un moule,
- obtenir ladite solidification de ladite mousse introduite dans ledit moule.

8. Processus selon la revendication 6, dans lequel l'opération consistant à préparer ladite mousse comporte les étapes comprenant de:
- préparer ledit liquide précurseur de ladite mousse;
- émulsifier ledit liquide précurseur, particulièrement par l'intermédiaire d'un gaz.

9. Processus selon la revendication 6, dans lequel l'additif ou les additifs comprend ou comprennent au moins l'un d'un agent de gélification ou d'un édulcorant.

10. Processus selon la revendication 6, dans lequel ledit précurseur liquide est formé en combinant ensemble du café, un produit laitier, un agent de gélification et un édulcorant.

11. Processus selon la revendication 10, dans lequel ledit précurseur liquide comprend, en pourcentage sur la base de son poids total:
- pas moins de 40% de café, particulièrement 50% environ ;
- pas moins de 25% de produit laitier, particulièrement 35% environ;
- pas moins de 5% d'édulcorant, particulièrement 14% environ ;
- pas moins de 0,3% d'agent de gélification, particulièrement 1,3% environ.

12. Processus selon l'une ou plusieurs des revendications précédentes, dans lequel
- le café est du café "expresso", et/ou
- le produit laitier est de la crème de lait d'animal, et/ou
- l'agent de gélification est une gelée alimentaire en poudre, et/ou
- l'édulcorant est du sucre.

13. Processus selon la revendication 10, dans lequel l'opération de préparation dudit précurseur liquide comporte les étapes comprenant de:
- préparer le café;
- disperser l'additif ou les additifs dans le café encore chaud et mélanger le composé ainsi obtenu;
- chauffer le produit laitier sous forme liquide, de préférence en évitant son ébullition;
- ajouter le produit laitier au dit composé.

14. Processus selon la revendication 13, dans lequel émulsifier ledit précurseur liquide comporte les étapes comprenant de:
- ajouter un gaz pressurisé au précurseur liquide;
- mélanger le précurseur liquide avec le gaz.

15. Processus selon la revendication 6, dans lequel l'opération consistant à entraîner une solidification au moyen d'une lyophilisation comporte les étapes successives suivantes:
- soumettre la mousse à la congélation;
- soumettre la mousse à une étape de séchage primaire ou de sublimation, et
- soumettre la mousse à une étape de séchage secondaire.

16. Processus selon la revendication 7, dans lequel ladite opération d'introduction comporte les étapes comprenant de:
- répartir ladite mousse dans une structure alvéolaire dudit moule, et, si nécessaire,
- éliminer la mousse en excès par rapport à ladite structure alvéolaire.

17. Processus selon la revendication 7, dans lequel le moule est configuré sous la forme d'un conteneur qui réalise au moins une partie de l'emballage pour dose unique du produit.

18. Processus selon la revendication 17, comprenant, de plus l'opération consistant à fermer de façon étanche ledit conteneur par une membrane, particulièrement par collage à chaud.

19. Processus selon la revendication 6, comportant, de plus, l'opération consistant à saupoudrer sur le produit gazéifié un ingrédient supplémentaire sous la forme de poudre, en particulier du cacao en poudre.

20. Processus selon la revendication 6, comprenant de :
- préparer ledit précurseur liquide,
- émulsifier ledit précurseur liquide par l'intermédiaire d'un gaz, dans le but d'obtenir un précurseur mousseux d'un produit gazéifié,
- fournir un conteneur pour dose unique destiné au produit,
- introduire ledit précurseur mousseux dans ledit conteneur,
- obtenir la solidification dudit précurseur mousseux introduit dans ledit conteneur par l'intermédiaire d'une lyophilisation, de façon à former au moins un produit gazéifié respectif, et
- fermer hermétiquement ledit conteneur.
